# EUROPÄISCHE PATENTSCHRIFT

(11) **EP 1 132 281 B1**
(45) Veröffentlichungstag und Bekanntmachung des Hinweises auf die Patenterteilung: **29.01.2003**
(21) Anmeldenummer: 01105780.9
(22) Anmeldetag: 08.03.2001
(51) Int. Cl.: B62D 25/06, B62D 25/04

(54) **Verbindung zwischen dem Dach und der Seitenwand einer Kraftfahrzeugkarosserie**
Joint between the roof and the side panel of a motor vehicle body
Liaison entre le toit et le panneau latéral de la carrosserie d'un véhicule automobile

(30) Priorität: 11.03.2000 DE 10011946
(43) Veröffentlichungstag der Anmeldung: 12.09.2001
(73) Patentinhaber: ADAM OPEL AG, 65423 Rüsselsheim (DE)
(72) Erfinder: Schneider, Dirk, Dipl.-Ing., 65207 Wiesbaden (DE); Lessmeister, Roland, 67663 Kaiserslautern (DE); Hedrich, Karl, 55291 Saulheim (DE)
(74) Vertreter: Kümpfel, Heinz, Dipl.-Ing.

(56) Entgegenhaltungen:
- EP-A- 0 856 455
- DE-A- 19 638 156
- PATENT ABSTRACTS OF JAPAN vol. 2000, no. 03, 30. März 2000 (2000-03-30) -& JP 11 348821 A (FUJI HEAVY IND LTD), 21. Dezember 1999 (1999-12-21)

## Beschreibung

Die Erfindung bezieht sich auf eine Verbindung zwischen dem Dach und der Seitenwand einer Kraftfahrzeugkarosserie, wobei das Dach von einer durch mindestens einen Spriegel verstärkten Dachhaut gebildet ist und die Seitenwand aus einem Außenblech, einem Innenblech sowie einem zwischen diesen beiden Blechen angeordneten Verstärkungsblech besteht, wobei die korrespondieren Endbereiche der Seitenwandbleche und des Spriegels in einem Überlappungsbereich sandwichartig übereinandergelegt und miteinander verbunden sind.

Eine derartige Verbindung nach dem Oberbegriff des Anspruchs 1 ist in der DE 196 38 156 A1 beschrieben. Die Endbereiche von Dachhaut, Spriegel, Außenblech, Innenblech und Verstärkungsblech sind übereinander gelegt und durch eine einzige fünf Lagen umfassende Schweißung miteinander verbunden. Eine solche Schweißung ist nur schwer so zu realisieren, dass alle zu verbindenden Teile ausreichend fest miteinander verbunden sind. Aus der DE 38 36 808 C2 ist eine solche Verbindung mit einer vierlagige Schweißung bekannt. Hier wird allerdings auf einen zusätzlichen Spriegel verzichtet. Die DE 197 28 532 A1 zeigt ebenfalls eine vierlagige Verbindung, wobei allerdings auf ein zusätzliches Verstärkungsblech verzichtet wird.

Betrachtet man allerdings die Erfordernisse einer modernen Fahrzeugkarosserie in Bezug auf den Widerstand gegenüber Verformungen bei einem Seitenaufprall, so wird man feststellen, dass auf den Einsatz eines Verstärkungsbleches innerhalb der B-Säule des Fahrzeuges und auf einen Dachspriegel in der Verlängerung der B-Säule kaum verzichtet werden kann, um insbesondere den Übergangsbereich zwischen Seitenwand und Dach genügend steif halten zu können, damit die B-Säule bei einem Unfall mit Seitenaufprall nicht in die Fahrgastzelle eindringt.

Es besteht somit das Problem, in der Verbindung zwischen Dach und der Seitenwand 5 Karosserieteile miteinander zu verbinden. Dabei soll die Verbindungsstruktur eine ausreichende Steifigkeit aufweisen und außerdem leicht zu montieren sein. Daher wird man vermeiden müssen, dass vier- oder sogar fünflagige Schweißstellen auftreten.

Zur Lösung des Problems wird gemäß der Erfindung vorgeschlagen, dass im Überlappungsbereich das Innenblech eine Ausbuchtung in der Breite des Spriegels aufweist, der Endbereich des Spriegels in der Ausbuchtung liegt und dort mit dem Innenblech verschweißt ist, wobei der Spriegel mindestens eine Erhebung gegenüber dem Boden der Ausbuchtung aufweist, wobei auf der Kappe der Erhebung das Verstärkungsblech aufliegt und dort mit dem Spriegel verschweißt ist.

Dadurch, dass der Spriegel in der Erhebung einen Abstand zum Innenblech einhält, ist an der entsprechenden Schweißstelle die Anzahl der Lagen reduziert.

Wie weiter unten erläutert werden soll, kann bei der Erhebung das Außenblech das Verstärkungsblech kontaktieren und zusammen mit dem Spriegel und dem Verstärkungsblech verschweißt werden. Das ergibt zwar eine dreilagige Verschweißung, die aber noch gut zu handhaben ist und die eine ausreichend sichere Verbindung gewährleistet.

Es hat sich herausgestellt, dass der Spriegel in vorteilhafter Weise mit zwei Erhebungen versehen werden sollte, die beide an ihren Kappen das Verstärkungsblech kontaktieren und mit diesem verschweißt sind.

Um eine Verbindung des Verstärkungsbleches mit dem Innenblech zu erzielen, wird jenes mit einer Eindrückung versehen, so dass es den Spriegel außerhalb der Erhebungen bzw. zwischen den beiden Erhebungen kontaktiert und dort mit dem Spriegel verschweißt ist. Da der Spriegel in diesem Bereich gleichzeitig das Innenblech kontaktiert, kann diese Schweißung den Spriegel, das Verstärkungsblech und das Innenblech umfassen.

Da der Spriegel außerdem an weiteren Stellen mit dem Innenblech zweilagig verschweißt ist, ergibt sich eine feste Verbindung zwischen den bisher genannten Teilen. Zusätzlich können das Außenblech, das Verstärkungsblech und das Innenblech außerhalb der Ausbuchtung ebenfalls dreilagig miteinander verschweißt werden.

Die Dachhaut wird mit dem Außenblech verbunden allerdings nicht auf der Linie der bisher genannten Schweißpunkte, sondern an einem bezogen auf die Kraftfahrzeugmitte nach außen abgesetzten Auflagenbereich, so dass die zuvor beschriebenen Schweißpunkte unterhalb der Dachhaut liegen und gegen Witterungseinflüsse geschützt sind. Vorzugsweise wird die Dachhaut mit dem Außenblech und dem Spriegel verklebt.

Zur Erläuterung der Erfindung wird im Folgenden ein Ausführungsbeispiel an Hand von 5 Fig. dargestellt.

Es zeigen:
- Fig. 1: die Verbindung des Innenbleches einer Seitenwand mit einem Dachspriegel;
- Fig. 1a: einen Längsschnitt durch den Verbindungsbereich;
- Fig. 2: die Verbindung des Dachspriegels mit dem Verstärkungsblech und dem Außenblech der Seitenwand;
- Fig. 2a: einen Längsschnitt durch den Verbindungsbereich und
- Fig. 3: einen Querschnitt durch den Verbindungsbereich.

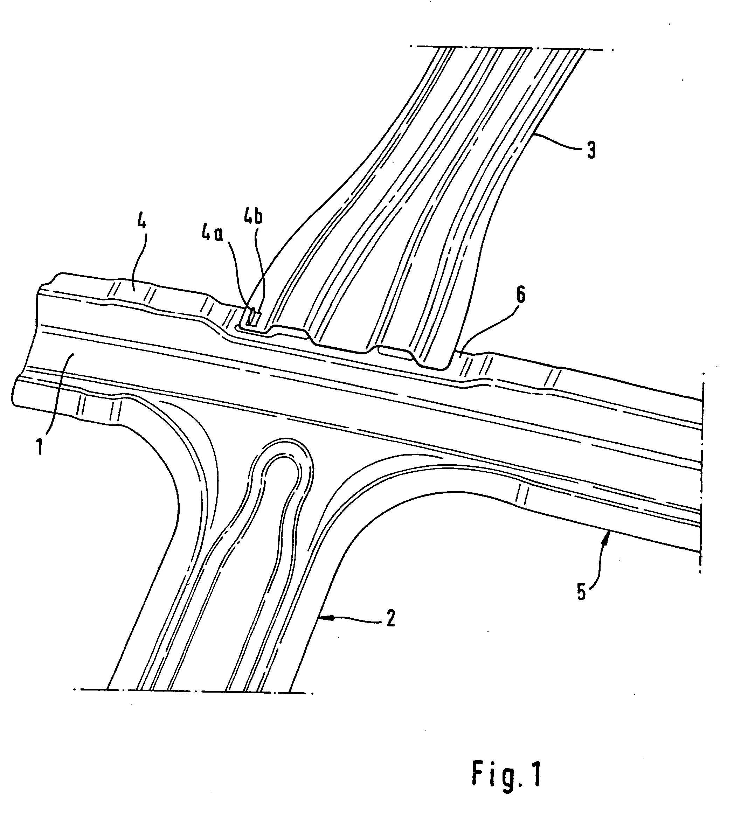

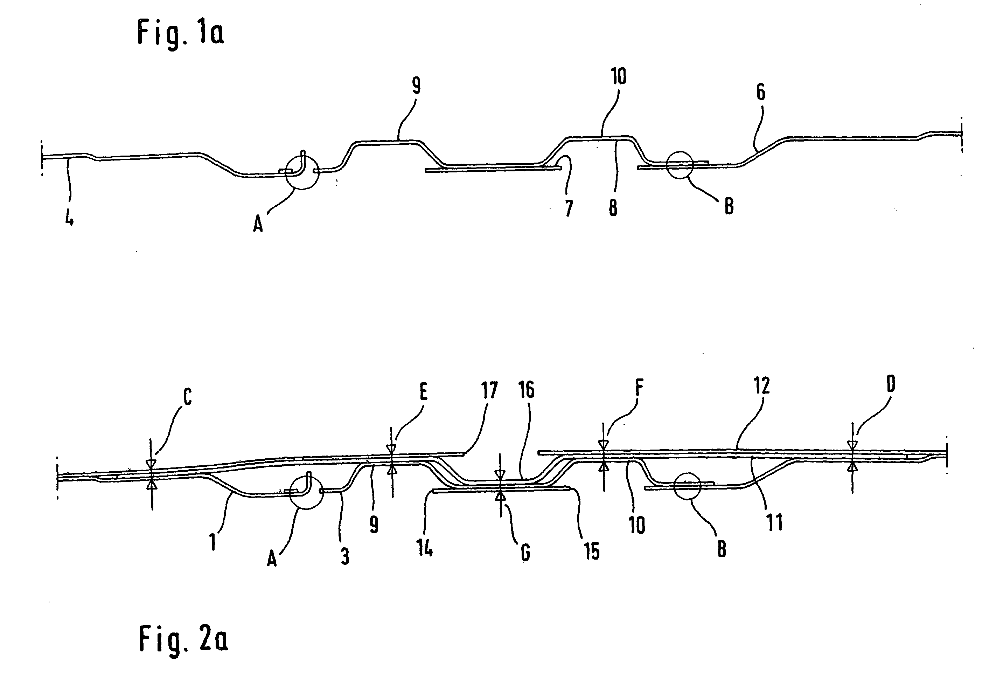

Zunächst wird auf die Fig. 1, 1a Bezug genommen. Figur 1 zeigt das Innenblech 1 einer Seitenwand. Diese umfasst Abschnitte, die im Zusammenbau die Innenwand der B-Säule 2 bilden. In der Verlängerung dieser Säule befindet sich ein Spriegel 3, der sich von der hier dargestellten rechten Seitenwand zu der nicht dargestellten linken Seitenwand erstreckt. Auf den Spriegel 3 liegt die in dieser Fig. nicht dargestellte Dachhaut 20 des Fahrzeuges auf.

Ein Flansch 4 entlang der oberen Kante des Innenblechs 1, der mit einem entsprechenden Gegenflansch 13 am Außenblech der Seitenwand verbunden wird, wobei sich ein oberer Seitenholm 5 ergibt, weist auf Höhe der B-Säule 2 eine Vertiefung 6 auf, auf deren Boden 7 der Endflansch 8 des Spriegels 3 aufliegt. Dieser Endflansch weist zwei Erhebungen 9, 10 auf (siehe auch Fig. 1a), deren Kappen bis zum gedachten oberen Abschluss der Vertiefung 6 reichen. Bei den Erhebungen handelt es sich um Endbereiche einer Spriegelprofilierung. In seinen Randbereichen ist der Spriegel 3 am Boden 7 in den Punkten A, B verschweißt. An Stelle einer Verschweißung kann auch eine formschlüssige Verbindung vorgesehen werden; dazu wird aus dem Flansch 4 des Innenblechs eine Lasche 4a aufgebogen, die durch eine entsprechende Öffnung 4b im Spriegel gesteckt und umgebogen wird. Diese Verbindung wird hergestellt, nachdem das Innenblech 1 mit dem schon aufgebauten Karosserieboden verbunden worden ist.

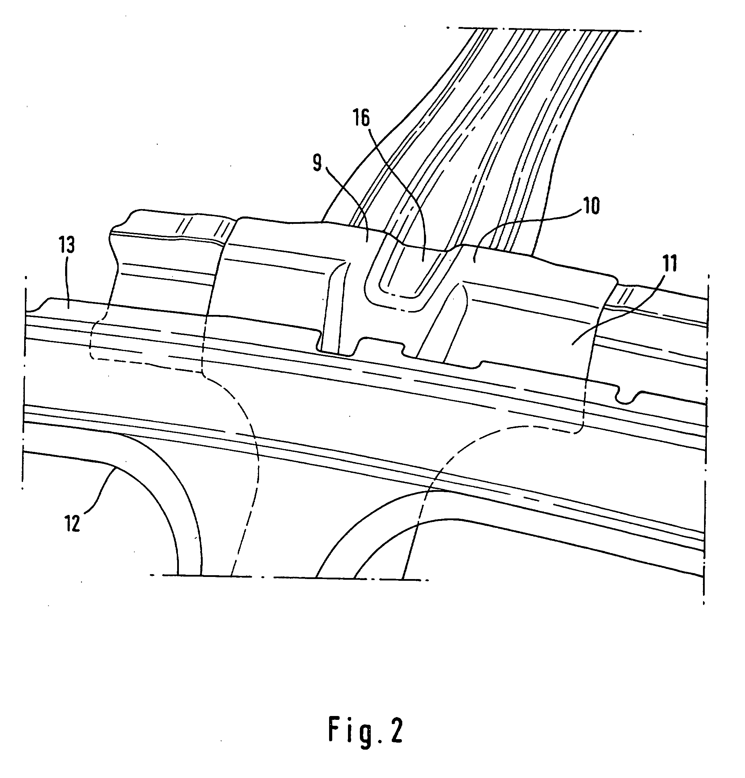

Danach erfolgt in einem zweiten Schritt die Verbindung des Innenblechs 1 der Seitenwand mit dem Verstärkungsblech 11 und dem Außenblech 12 der Seitenwand. Dazu wird zuvor das Verstärkungsblech 11 in die Ausformung für die B-Säule 2 im Außenblech 12 eingelegt und dort befestigt. Das Verstärkungsblech 11 erstreckt sich über die gesamte Länge der B-Säule 2 und weist an seinen Enden T-förmige Verbreiterungen auf, die sich in den unteren bzw. oberen Holm 5 ein Stück hinein erstrecken. Die so vorbereitete Einheit wird an das Innenblech 1 gesetzt, wobei der Gegenflansch 13 des Außenblechs 12 mit dem Flansch 4 des Innenbleches 1, wie oben schon angedeutet, verschweißt wird. Im Bereich der B-Säule 2 befindet sich zwischen den beiden Flanschen das Verstärkungsblech 11, das insofern mitverschweißt wird, so dass sich dort dreilagige Schweißpunkte C und D ergeben (siehe Fig. 2a). Des Weiteren liegt das Verstärkungsblech 11 auf den Kappen der Erhebungen 9, 10 auf und wird dort zusammen mit dem Außenblech 12 in einer 3-lagigen Punktschweißung mit dem Spriegel 3 verschweißt (Schweißpunkte E und F). Damit die Schweißzange angesetzt werden kann, befinden sich im Flansch 4 des Innenblechs 1 randoffene Ausnehmungen 14, 15.

Damit eine weitere Schweißverbindung des Verstärkungsbleches 11 zum Innenblech 1 gesetzt werden kann, weist dieses eine Eindrückung 16 zwischen den beiden Erhebungen 9 und 10 auf, die den Spriegel 3 in einem Bereich kontaktiert, mit dem dieser auf dem Boden 7 der Vertiefung 6 aufliegt. Bei der Eindrückung handelt es sich um die Verlängerung einer Profilrinne im Verstärkungsblech. Hier kann ein weiterer Schweißpunkt G (dreilagig) gesetzt werden, der zur weiteren Versteifung des Verbindungsknotens beiträgt. Damit die Schweißzange zugreifen kann, ist oberhalb dieses Schweißpunktes G eine randoffene Ausnehmung 17 im Außenblech vorgesehen.

Durch die dargestellte verschachtelte Verschweißung der genannten Teile ergibt sich eine äußerst steife Verbindung aus vier Blechen, die darüber hinaus noch leicht zu realisieren ist, da die Schweißpunkte jeweils nur höchstens drei übereinander liegende Bleche miteinander verbinden.

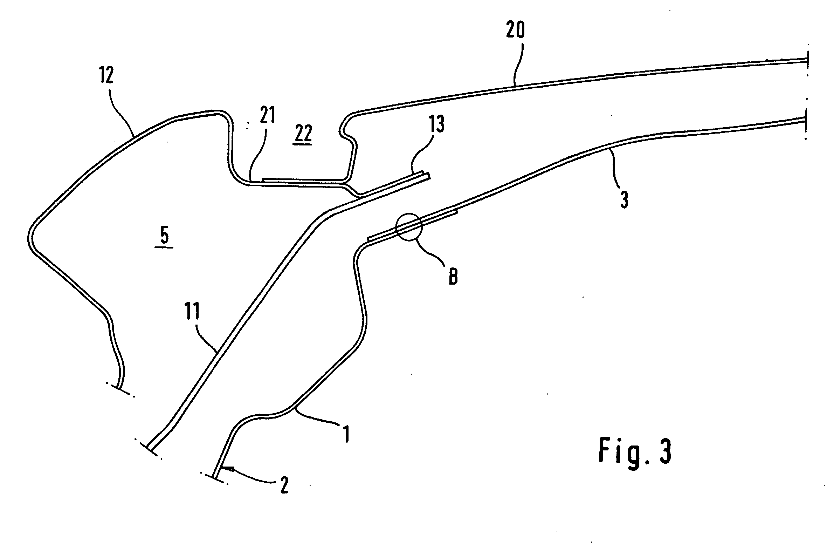

Wie die Schnittdarstellung der Figur 3 zeigt, wird die Dachhaut 20 nicht mit dem Gegenflansch 13 des Außenblechs verbunden, sondern mit einem parallel dazu verlaufenden nach außen abgesetzten Auflagenbereich 21. Der dargestellte Schnitt erfolgt auf Höhe des Schweißpunktes B. Der Auflagenbereich 21 sowie der korrespondierende Flansch der Dachhaut 20 sind gegenüber der Außenkontur des Fahrzeuges nach innen abgesetzt, so dass eine Wasserablaufrinne 22 entsteht. Da die Verbindung der Dachhaut 20 mit dem Außenblech 12 an einer Stelle erfolgt, die nicht beidseitig von einer Schweißzange ergriffen werden kann, wird hier eine Verklebung vorgesehen. Diese ist ausreichend, da die Stoßkräfte, die bei einem Seitenaufprall auftreten, im Wesentlichen vom Spriegel aufgenommen werden können.

Statt einer Verklebung kann auch ein Laserschweißverfahren eingesetzt werden.

## Patentansprüche

1. Verbindung zwischen dem Dach und der Seitenwand einer Kraftfahrzeugkarosserie, wobei das Dach von einer durch mindestens einen Spriegel (3) verstärkten Dachhaut (20) gebildet ist und die Seitenwand aus einem Außenblech (12), einem Innenblech (1) sowie einem zwischen diesen beiden Blechen angeordneten Verstärkungsblech (11) besteht, wobei die korrespondierenden Endbereiche der Seitenwandbleche und des Spriegels (3) in einem Überlappungsbereich sandwichartig übereinandergelegt und miteinander verbunden sind, **dadurch gekennzeichnet, dass** im Überlappungsbereich das Innenblech (1) eine Ausbuchtung (6) in der Breite des Spriegels (3) aufweist, der Endbereich des Spriegels (3) in der Ausbuchtung (6) liegt und dort mit dem Innenblech (1) verschweißt ist, wobei der Spriegel (3) mindestens eine Erhebung (9, 10) gegenüber dem Boden (7) der Ausbuchtung (6) aufweist, wobei auf der Kappe der Erhebung (9, 10) das Verstärkungsblech (11) aufliegt und dort mit dem Spriegel (3) verschweißt ist.

2. Verbindung nach Anspruch 1, **dadurch gekennzeichnet, dass** der Spriegel (3) zwei Erhebungen (9, 10) aufweist, auf denen das Verstärkungsblech (11) aufliegt und an denen es mit dem Spriegel (3) verschweißt ist.

3. Verbindung nach Anspruch 1 oder 2, **dadurch gekennzeichnet, dass** das Verstärkungsblech (11) mindestens eine Eindrückung (16) aufweist, deren Boden den Spriegel (3) außerhalb der Erhebung (9, 10) kontaktiert und dort mit diesem verschweißt ist.

4. Verbindung nach Anspruch 2, **dadurch gekennzeichnet, dass** das Verstärkungsblech (11) genau eine Eindrückung (16) aufweist, die sich zwischen den beiden Erhebungen (9, 10) des Spriegels (3) befindet und deren Boden den Spriegel (3) kontaktiert und dort mit diesem verschweißt ist.

5. Verbindung nach einem der vorhergehenden Ansprüche, **dadurch gekennzeichnet, dass** an den Stellen an denen der Boden der Eindrückung (16) des Verstärkungsblechs (11) mit dem Spriegel (3) verschweißt ist, der Spriegel (3) außerdem mit dem Innenblech (1) verschweißt ist.

6. Verbindung nach einem der vorhergehenden Ansprüche, **dadurch gekennzeichnet, dass** das Außenblech (12) auf dem Verstärkungsblech (11) aufliegt und wenigstens an den Stellen mit dem Verstärkungsblech (11) verschweißt ist, an der dieses mit den Erhebungen (9, 10) des Spriegels (3) verschweißt ist.

7. Verbindung nach Anspruch 5, **dadurch gekennzeichnet, dass** oberhalb der Stelle, an der das Verstärkungsblech (11), das Innenblech (1) und der Spriegel (3) miteinander verschweißt sind, sich eine randoffene Ausnehmung (17) im Außenblech (12) befindet.

8. Verbindung nach einem der vorhergehenden Ansprüche, **dadurch gekennzeichnet,** das gegenüber dem Endbereich des Außenblechs (12) nach außen - bezogen auf die Kraftfahrzeugmitte - abgesetzt ein Auflagenbereich (21) verläuft, auf dem der Rand der Dachhaut (20) aufliegt.

## Claims

1. Joint between the roof and the side wall of a motor vehicle body, wherein the roof is formed by a roof panel (20) reinforced by at least one bow (3) and the side wall consists of an exterior panel (12), an interior panel (1) and a reinforcing panel (11) arranged between these two panels, wherein the corresponding end regions of the side wall panels and bow (3) are laid one over the other in sandwich fashion in an overlap region and joined together, **characterised in that** in the overlap region the interior panel (1) comprises a bulge (6) having the width of the bow (3), the end region of the bow (3) is located in the bulge (6) and there welded to the interior panel (1), wherein the bow (3) comprises at least one raised area (9, 10) relative to the bottom (7) of the bulge (6), wherein the reinforcing panel (11) rests on the crown of the raised area (9, 10) and is there welded to the bow (3).

2. Joint according to claim 1, **characterised in that** the bow (3) comprises two raised areas (9, 10) on which the reinforcing panel (11) rests and at which it is welded to the bow (3).

3. Joint according to claim 1 or 2, **characterised in that** the reinforcing panel (11) comprises at least one indentation (16) of which the bottom contacts the bow (3) outside the raised area (9, 10) and is there welded to the bow (3).

4. Joint according to claim 2, **characterised in that** the reinforcing panel (11) comprises exactly one indentation (16) which is located between the two raised areas (9, 10) of the bow (3) and of which the bottom contacts the bow (3) and is there welded to the latter.

5. Joint according to any of the preceding claims, **characterised in that**, at the locations at which the bottom of the indentation (16) of the reinforcing panel (11) is welded to the bow (3), the bow (3) is moreover welded to the interior panel (1).

6. Joint according to any of the preceding claims, **characterised in that** the exterior panel (12) rests on the reinforcing panel (11) and is welded to the reinforcing panel (11) at least at the locations at which the latter is welded to the raised areas (9, 10) of the bow (3).

7. Joint according to claim 5, **characterised in that**, above the location at which the reinforcing panel (11), the interior panel (1) and the bow (3) are welded to each other, an open-edge recess (17) is located in the exterior panel (12).

8. Joint according to any of the preceding claims, **characterised in that** opposite the end region of the exterior panel (12) offset outwardly - referred to the centre of the motor vehicle - runs a support region (21) on which rests the edge of the roof panel (20).

## Revendications

1. Liaison entre le toit et la paroi latérale d'une carrosserie de véhicule automobile, le toit étant formé d'une couverture (20) renforcée par au moins un arceau (3), et la paroi latérale étant formée d'une tôle extérieure (12), d'une tôle intérieure (1), ainsi que d'une tôle de renfort (11) disposée entre lesdites deux tôles, les régions d'extrémité correspondantes des tôles de paroi latérale et de l'arceau (3) étant empilées en sandwich et liées entre elles dans une zone de chevauchement, **caractérisée en ce que**, dans la zone de chevauchement, la tôle intérieure (1) présente une échancrure (6) de la largeur de l'arceau (3), **en ce que** l'extrémité de l'arceau (3) repose dans l'échancrure (6) et est soudée à cet endroit à la tôle intérieure (1), l'arceau (3) présentant au moins une surélévation (9, 10) par rapport au fond (7) de l'échancrure (6), la tôle de renfort (11) reposant sur le sommet de la surélévation (9, 10) et étant soudée à cet endroit à l'arceau (3).

2. Liaison selon la revendication 1, **caractérisée en ce que** l'arceau (3) présente deux surélévations (9, 10) sur lesquelles la tôle de renfort (11) repose et au niveau desquelles la tôle de renfort est soudée à l'arceau (3).

3. Liaison selon la revendication 1 ou 2, **caractérisée en ce que** la tôle de renfort (11) présente au moins une moulure en creux (16), dont le fond est en contact avec l'arceau (3) en dehors de la surélévation (9, 10) et est soudé à cet endroit à l'arceau (3).

4. Liaison selon la revendication 2, **caractérisée en ce que** la tôle de renfort (11) présente exactement une moulure en creux (16) qui est située entre les deux surélévations (9, 10) de l'arceau (3), et dont le fond est en contact avec l'arceau (3) et est soudé à celui-ci à cet endroit.

5. Liaison selon une des revendications précédentes, **caractérisée en ce qu'**aux points où le fond de la moulure en creux (16) de la tôle de renfort (11) est soudé à l'arceau (3), l'arceau (3) est en outre soudé à la tôle intérieure (1).

6. Liaison selon une des revendications précédentes, **caractérisée en ce que** la tôle extérieure (12) repose sur la tôle de renfort (11) et est soudée à la tôle de renfort (11) au moins aux points où celle-ci est soudée aux surélévations (9, 10) de l'arceau (3).

7. Liaison selon la revendication 5, **caractérisée en ce qu'**au dessus du point où la tôle de renfort (11), la tôle intérieure (1) et l'arceau (3) sont soudés les uns aux autres, une échancrure (17) ouverte sur le bord est aménagée dans la tôle extérieure (12).

8. Liaison selon une des revendications précédentes, **caractérisée en ce qu'**en vis-à-vis de la région d'extrémité de la tôle extérieure (12), en direction de l'extérieur par rapport au milieu du véhicule, est aménagée une zone d'appui (21) en retrait, sur laquelle repose le bord de la couverture de toit (20).
